# EUROPÄISCHE PATENTANMELDUNG

(11) **EP 3 586 648 A1**
(43) Veröffentlichungstag der Anmeldung: **01.01.2020**
(21) Anmeldenummer: 19175338.3
(22) Anmeldetag: 14.12.2012
(51) Int. Cl.: A23L 3/005, A23L 3/10

(54) **VERFAHREN ZUR STERILERHITZUNG VON LEBENSMITTELN**

(30) Priorität: 16.12.2011 DE 102011121171
(62) Teilanmeldung aus: 12008338.1
(71) Anmelder: Hipp & Co, 6072 Sachseln (CH)
(72) Erfinder: TOMUSCH, Frithjof, 4810 Gmunden (AT); HEIL, Gerhard, 85276 Pfaffenhofen (DE)
(74) Vertreter: Schiweck Weinzierl Koch Patentanwälte Partnerschaft mbB

(57) **Zusammenfassung**

Bei einem Verfahren zur Sterilisierung von Lebensmitteln wird das Lebensmittel in einem Behälter auf 90 bis 150 °C erhitzt und im gleichen Behälter auf über 80 °C abgekühlt.

## Beschreibung

Die Erfindung betrifft ein Verfahren zur Sterilerhitzung von Lebensmitteln.

Bekannte UHT-Anlagen zur Sterilisierung von aseptisch zu verpackenden Lebensmitteln arbeiten kontinuierlich mit Wärmetauschern. Dies erschwert die Behandlung von Lebensmitteln insbesondere mit grobstückigen Anteilen, da durch die Sterilisierung die strukturelle Beschaffenheit der Lebensmittel verändert wird. Außerdem führt die massive Scherbelastung vor allem im Kühlprozess zu starken negativen Einflüssen auf die rheologischen Eigenschaften des Produkts.

Der Erfindung liegt die Aufgabe zu Grunde, ein Verfahren zur Sterilisierung von Lebensmitteln vorzustellen, bei dem die Lebensmittel nur wenig belastet werden.

Diese Aufgabe wird mit einem Verfahren zur Sterilerhitzung von Lebensmitteln gelöst, bei dem das Lebensmittel in einem Behälter auf 90 bis 150 °C erhitzt wird und im gleichen Behälter auf 50 bis 100 °C abgekühlt wird.

Vorteilhaft ist es, wenn das Lebensmittel auf 110 bis 130 °C erhitzt wird. Eine bevorzugte Abkühlung des Lebensmittels liegt bei einem Wert von 60 bis 80 °C.

Um eine erneute Kontaminierung des Lebensmittels zu vermeiden, wird vorgeschlagen, dass es nach dem Abkühlen sofort abgefüllt wird. Die Abfülltemperatur liegt dann vorzugsweise bei über 60 °C.

Dann ist es vorteilhaft, das Lebensmittel sofort nach dem Abfüllen auf ca. 30 °C abzukühlen.

Eine vorteilhafte Ausführungsvariante sieht vor, dass das Lebensmittel gemäß einem vorgegebenen F-Wert gesteuert erhitzt und abgekühlt wird.

Das Verfahren eignet sich insbesondere für Behälter mit einem Volumen von 20 bis 4001.

Um größere Mengen eines Lebensmittels gleichzeitig zu sterilisieren, wird vorgeschlagen, dass das Lebensmittel chargenweise in mehreren Behältern parallel sterilisiert und kontinuierlich abgefüllt wird.

Das Lebensmittel kann induktiv oder mit Hochfrequenz erhitzt werden. Die Abkühlung erfolgt vorzugsweise mittels Mantelkühlung und/oder mittels Vakuumkühlung. Hierbei können die Erhitzungs- und die Kühlverfahren auch kombiniert werden.

Nach dem Abfüllen wird das Lebensmittel vorzugsweise im Kühlbad abgekühlt. Dies erlaubt es, die abgefüllten Gebinde schnell auf eine Temperatur von etwa 30 °C zu bringen.

Bei der Angabe der Temperaturen insbesondere im Gebinde wird der Wert für die Mischtemperatur im Gebinde angegeben. Die Kerntemperatur liegt dann höher. Nach dem Abkühlen des befüllten Gebindes liegt die Kerntemperatur bei etwa 40 °C.

Vorzugsweise wird das Lebensmittel innerhalb einer Zeitspanne von weniger als einer Stunde erhitzt, abgekühlt, abgefüllt und auf ca. 30 °C abgekühlt.

In einem bevorzugten Ausführungsbeispiel wird ein Lebensmittel chargenweise direkt F-Wert gesteuert steril erhitzt und anschließend mit Vakuum- und Mantelkühlung gekühlt. Dabei wird das Produkt in einer kleinen Druckkochanlage mit 20 bis 400 1 Arbeitsvolumen vorgelegt. Anschließend wird das Produkt mit Dampf oder alternativen Erhitzungsverfahren wie induktiver Erhitzung oder Hochfrequenzerhitzung auf bis zu 130 °C erhitzt. Dieser Vorgang wird direkt über den zu erzielenden F-Wert gesteuert. Im Anschluss wird das Produkt im gleichen Behälter mittels Mantelkühlung oder Vakuumkühlung gegebenenfalls mit Aromarückgewinnung auf 60 bis 80 °C oder auch über 80 °C zurückgekühlt, um anschließend abgefüllt zu werden. Nach dem Abfüllen wird das Lebensmittel im Gebinde in einem Kühlbad auf etwa 30 °C abgekühlt und dann gelagert.

Alle beschriebenen Prozessschritte erfolgen unmittelbar aufeinander, so dass das gesamte Verfahren zur Behandlung des Lebensmittels insbesondere wegen der Erhitzung und Kühlung im gleichen Behälter weniger als eine Stunde benötigt. Ein beschleunigtes Verfahren ist sogar in 45 Minuten und bevorzugt sogar in 30 Minuten durchführbar.

Durch die Parallelschaltung mehrerer Koch- und Kühleinheiten kann eine beliebige Abfüllleistung sichergestellt werden.

Die Erfindung wird ferner durch die folgenden Ausführungsformen beschrieben:
1. Verfahren zur Sterilerhitzung von Lebensmitteln, bei dem das Lebensmittel in einem Behälter auf 90 bis 150 °C erhitzt wird und direkt danach im gleichen Behälter auf 50 bis 100 °C abgekühlt wird.
2. Verfahren nach Ausführungsform 1, ***dadurch gekennzeichnet, dass*** das Lebensmittel auf 110 bis 130 °C erhitzt
   wird.
3. Verfahren nach Ausführungsform 1 oder 2, ***dadurch gekennzeichnet, dass*** das Lebensmittel auf 60 bis 80 °C abgekühlt wird.
4. Verfahren nach einem der vorhergehenden Ausführungsformen, ***dadurch gekennzeichnet,***
   ***dass*** das Lebensmittel nach dem Abkühlen sofort abgefüllt wird.
5. Verfahren nach einem der vorhergehenden Ausführungsformen, ***dadurch gekennzeichnet, dass*** das Lebensmittel sofort nach dem Abfüllen auf ca. 30 °C abgekühlt wird.
6. Verfahren nach einem der vorhergehenden Ausführungsformen, ***dadurch gekennzeichnet, dass*** das Lebensmittel gemäß einem vorgegebenen F-Wert gesteuert erhitzt und abgekühlt wird
7. Verfahren nach einem der vorhergehenden Ausführungsformen, ***dadurch gekennzeichnet, dass*** der Behälter ein Volumen von 20 bis 400 1 aufweist.
8. Verfahren nach einem der vorhergehenden Ausführungsformen, ***dadurch gekennzeichnet, dass*** das Lebensmittel chargenweise in mehreren Behältern parallel sterilisiert und kontinuierlich abgefüllt wird.
9. Verfahren nach einem der vorhergehenden Ausführungsformen, ***dadurch gekennzeichnet, dass*** das Lebensmittel induktiv erhitzt wird.
10. Verfahren nach einem der vorhergehenden Ausführungsformen ***dadurch gekennzeichnet, dass*** das Lebensmittel mit Hochfrequenz erhitzt wird.
11. Verfahren nach einem der vorhergehenden Ausführungsformen, ***dadurch gekennzeichnet, dass*** das Lebensmittel vor dem Abfüllen mittels Mantelkühlung abgekühlt wird.
12. Verfahren nach einem der vorhergehenden Ausführungsformen, ***dadurch gekennzeichnet, dass*** das Lebensmittel vor dem Abfüllen mittels Vakuumkühlung abgekühlt wird.
13. Verfahren nach einem der vorhergehenden Ausführungsformen, ***dadurch gekennzeichnet, dass*** das Lebensmittel nach dem Abfüllen im Kühlbad abgekühlt wird.
14. Verfahren nach einem der vorhergehenden Ausführungsformen, ***dadurch gekennzeichnet, dass*** das Lebensmittel innerhalb einer Zeitspanne von weniger als einer Stunde erhitzt, abgekühlt, abgefüllt und auf ca. 30 °C abgekühlt wird.

## Patentansprüche

1. Verfahren zur Sterilerhitzung von Lebensmitteln, bei dem das Lebensmittel in einem Behälter auf 90 bis 150 °C erhitzt wird und im gleichen Behälter auf 50 bis 100 °C abgekühlt wird.

2. Verfahren nach Ausführungsform 1, ***dadurch gekennzeichnet, dass*** das Lebensmittel auf 110 bis 130 °C erhitzt wird.

3. Verfahren nach Ausführungsform 1 oder 2, ***dadurch gekennzeichnet, dass*** das Lebensmittel auf 60 bis 80 °C abgekühlt wird.

4. Verfahren nach einem der vorhergehenden Ausführungsformen, ***dadurch gekennzeichnet, dass*** das Lebensmittel nach dem Abkühlen sofort abgefüllt wird.

5. Verfahren nach einem der vorhergehenden Ausführungsformen, ***dadurch gekennzeichnet, dass*** das Lebensmittel sofort nach dem Abfüllen auf ca. 30 °C abgekühlt wird.

6. Verfahren nach einem der vorhergehenden Ausführungsformen, ***dadurch gekennzeichnet, dass*** das Lebensmittel gemäß einem vorgegebenen F-Wert gesteuert erhitzt und abgekühlt wird.

7. Verfahren nach einem der vorhergehenden Ausführungsformen, ***dadurch gekennzeichnet, dass*** der Behälter ein Volumen von 20 bis 400 1 aufweist.

8. Verfahren nach einem der vorhergehenden Ausführungsformen, ***dadurch gekennzeichnet, dass*** das Lebensmittel induktiv erhitzt wird.

9. Verfahren nach einem der vorhergehenden Ausführungsformen 1-7, ***dadurch gekennzeichnet, dass*** das Lebensmittel mit Hochfrequenz erhitzt wird.

10. Verfahren nach einem der vorhergehenden Ausführungsformen 1-7, ***dadurch gekennzeichnet, dass*** das Lebensmittel mit Direktdampf auf bis zu 130 °C erhitzt wird.

11. Verfahren nach einem der vorhergehenden Ausführungsformen, ***dadurch gekennzeichnet, dass*** das Lebensmittel vor dem Abfüllen mittels Mantelkühlung und/oder mittels Vakuumkühlung abgekühlt wird.

12. Verfahren nach einem der vorhergehenden Ausführungsformen, ***dadurch gekennzeichnet, dass*** das Lebensmittel nach dem Abfüllen im Kühlbad abgekühlt wird.

13. Verfahren nach einem der vorhergehenden Ausführungsformen, ***dadurch gekennzeichnet, dass*** das Lebensmittel innerhalb einer Zeitspanne von weniger als einer Stunde erhitzt, abgekühlt, abgefüllt und nach dem Abfüllen auf ca. 30 °C abgekühlt wird.

14. Verfahren nach der Ausführungsform 13, ***dadurch gekennzeichnet, dass*** das Lebensmittel innerhalb einer Zeitspanne von 30 Minuten erhitzt, abgekühlt, abgefüllt und nach dem Abfüllen auf ca. 30 °C abgekühlt wird.
